# EUROPÄISCHE PATENTANMELDUNG

(11) **EP 0 898 186 A1**
(43) Veröffentlichungstag der Anmeldung: **24.02.1999**
(21) Anmeldenummer: 98114379.5
(22) Anmeldetag: 31.07.1998
(51) Int. Cl.: G02B 6/38

(54) **Steckverbindung für Lichtleit-Kabel bzw.-Fasern**

(30) Priorität: 31.07.1997 DE 19733089; 12.08.1997 DE 19734922
(71) Anmelder: THYZEL, Reinhardt, D-90562 Heroldsberg (DE)
(72) Erfinder: THYZEL, Reinhardt, D-90562 Heroldsberg (DE)
(74) Vertreter: Münich, Wilhelm, Dr.

(57) **Zusammenfassung**

Beschrieben wird Steckverbindung zum zentrierten Anschließen einer lichtleitenden Faser (3), bei der ein Stecker (1) in eine Ausnehmung einer Buchse (2) eingreift, und bei der eine durch die Buchse geführte lichtleitende Faser (3) mit einem Faserende in einer Bohrung (16) des Steckers endet, die in Richtung der Buchse trichterförmig aufgeweitet ist.

Die Erfindung zeichnet sich dadurch aus, daß in der Ausnehmung der Buchse ein Rohr vorgesehen ist, das die Faser innerhalb der Bohrung des Steckers praktisch bis zum Faserende umgibt.

## Beschreibung

### Technisches Gebiet

Die Erfindung betrifft eine Steckverbindung Zum zentrierten Anschließen einer lichtleitenden Faser bzw. eines Kabels gemäß dem Oberbegriff des Patentanspuchs 1.

Derartige Steckverbindungen werden beispielsweise zum Verbinden von Lichtleitern bzw. Lichtleit-Fasern (Kabeln) oder für deren Verbindung mit optischen Systemen verwendet. Nur beispielhaft seien folgende Anwendungsfälle genannt:

Die Verbindung zweier lichtleitender Fasern für universelle Anwendungen und insbesondere von Fasern bzw. Kabeln für Laserstrahlen, der Anschluß eines Lichtleit-Kabels an einen Laser, an eine sonstige Lichtquelle wie z.B. eine endoskopische Beleuchtung, an ein optisches System oder an ein medizinisches Gerät wie eine Spaltlampe für die Ophthalmologie.

### Stand der Technik

Steckverbindungen, von denen bei der Formulierung des Oberbegriffs des Anspruchs 1 ausgegangen worden ist, sind in DE 25 12 330 B2 oder der US 4 087 158 beschrieben.

Die DE 25 12 330 B2 beschreibt eine Steckverbindung gemaß dem Oberbegriff des Patentanspuchs 1, bei der ein Stecker in eine Ausnehmung in einer Buchse eingreift, innerhalb derer sich das anzuschließende Ende einer lichtleitenden Faser befindet. Der Stecker ist zum zentrierten Anschließen der Faser mit einer Bohrung versehen. Die Bohrung ist in Richtung der Buchse trichterförmig aufgeweitet, um die durch die Buchse hindurchgeführte Faser beim Zusammensetzen von Stecker und Buchse nicht zu beschädigen. In der zusammengesetzten Steckverbindung endet das Faserende in einer Bohrung des Steckers.

Sowohl die Ausnehmung der Buchse bzw. der sie umgebende Buchsenrand als auch die trichterförmige Aufweitung der Steckerbohrung dienen dazu, das Faserende beim Zusammensetzen von Stecker und Buchse vor Beschädigungen zu schützen.

Nachteilig ist allerdings, daß das Faserende beim Zusammensetzen mit der trichterförmigen Aufweitung der Steckerbohrung in Berührung kommen kann. Wird es dabei verschmutzt oder beschädigt, verschlechtert sich die Qualität der optischen Übertragung ungeachtet der genauen Zentrierung der Steckverbindung.

Die US 4 087 158 beschreibt eine Steckverbindung, bei der zwei miteinander zu verbindende Faserenden fest in kleine Röhrchen eingebracht sind, deren Enden nach dem Einsetzen der Fasern feingeschliffen und poliert werden. Die zum Faserende hin außen konisch zulaufenden Röhrchen sind von entgegengesetzten Seiten in ein Mittelteil mit entsprechenden konischen Aussparungen eingebracht und berühren sich darin fast. Die Röhrchen und das Mittelteil bestehen aus Metall.

Da die Faserenden zusammen mit den Endflächen der Röhrchen feingeschliffen und poliert sind, schützt die Stirnfläche der Röhrchen die darin befindlichen Faserenden.

Nachteilig ist jedoch die aufwendige Bearbeitung der Stirnflächen, durch die die Herstellkosten deutliche erhöht werden.

### Darstellung der Erfindung Der Erfindung liegt die Aufgabe Zugrunde, eine Steckverbindung zum zentrierten Anschließen einer oder mehrerer lichtleitender Fasern anzugeben, die eine Verschmutzung oder Beschädigung von Faserenden praktisch ausschließt, ohne daß eine aufwendige Bearbeitung der Faserenden erforderlich ist. Darüberhinaus soll die erfindungsgemäße Steckverbindung kostengünstig und insbesondere unter Verwendung von Standardteilen herstellbar sein.

Eine erfindungsgemäße Lösung dieser Aufgabe ist im Patentanspruch 1 angegeben. Weiterbildungen der Erfindung sind Gegenstand der Ansprüche 2ff.

Erfindungsgemäß ist in der Ausnehmung der Buchse ein Rohr vorgesehen, das die Faser innerhalb der Bohrung des Steckers praktisch bis zum Faserende umgibt. Sie verhindert eine direkte Berührung des Faserendes mit der trichterförmigen Aufweitung der Steckerbohrung. Zudem sichert sie die zentrierte Lage des Faserendes innerhalb der Buchse. Dementsprechend ist der Durchmesser der Steckerbohrung, in die das Faserende mündet, nicht auf den Durchmesser der Faser, sondern auf den des sie umgebenden Rohres abgestimmt. Auf diese Weise kommt beim Zusammensetzen von Stecker und Buchse kein Bereich der Faser mit dem Stecker in Berührung; eine Beschädigung der Faser bzw. des Lichtleit-Kabels ist damit ausgeschlossen.

Eine bevorzugte Ausführungsform sieht vor, daß der Stecker und die Ausnehmung der Buchse, in die der Stecker eingreift, in Längsrichtung eine konische Verjüngung aufweisen. Dies erleichtert das Zusammenstecken von Stecker und Buchse und erspart, sofern die Ausnehmung der Buchse ausreichend tief ist, um den Stecker kraft- bzw. reibschlüssig einzudrücken, eine zusätzliche Sicherung der Steckverbindung. Der Winkel der konischen Verjüngung beträgt vorzugsweise nur wenige Grad.

Eine vorteilhafte Weiterbildung sieht vor, daß das Rohr von einem weiteren stärkeren Rohr umgeben ist. Da das innere Rohr ähnlich dünn wie die Faser selbst ist und auch die Steckerbohrung keinen zu großen Durchmesser aufweisen soll, stabilisert das äußere Rohr mit größerer Wandstärke das innere und hält es sicher in der Buchse. Entsprechend der Trichteröffnung der Steckerbohrung ragt das Ende des inneren Rohres aus dem äußeren Rohr heraus.

Die Gefahr von Beschädigungen des Faserendes wird weiter reduziert, wenn das Rohr dicht unterhalb einer steckerseitigen Stirnfläche des Grundkörpers der Buchse endet, da dann zunächst der Stecker und der Buchsenrand einander berühren, noch bevor das Rohr den Stecker berührt. Typischerweise kann dabei das vordere Ende des Rohrs ca. 1,5 mm hinter der vorderen Stirnfläche des Grundkörpers der Buchse angeordnet sein.

Gemäß einer weiteren Ausführungsform ragt das Faserende geringfügig aus dem das vorderen Ende des Rohres heraus, so daß die optische Ankoppelung in keinem Fall durch den Innenrand des Rohres beeinträchtigt wird. Es ragt jedoch nur so wenig heraus, daß das Rohrende eine Berührung der Faser mit der trichterförmigen Aufweitung noch verhindert.

Besonders vorteilhaft ist es, wenn der Stecker und die Buchse aus Kunststoff bestehen und insbesondere Spritzgußteile sind, da dann die Herstellkosten so gering sind, daß die Steckverbindung auch für Einweg-Lichtleitkabel eingesetzt werden kann. Die Steckverbindung kann insbesondere aus einem durchscheinenden und insbesondere durchsichtigem Material bestehen, so daß hierdurch das Zusammenstecken aufgrund des durchscheinenden (sichtbaren) Laserstrahls erleichtert wird.

Vor allem können für die Grundkörper des Steckers und der Buchse handelsübliche Luer-Lock- bzw. Luer-Push-Anschlüsse für die Verbindung von Fluid-führenden Leitungen eingesetzt werden. In den in diesen Teilen vorgesehenen Fluid-Kanal werden dann die erfindungsgemäß vorgesehenen Elemente zum Schutz der Lichtleit-Kabel bzw. der Lichtleitfasern und die Lichtleiter selbst eingesetzt.

Weiteren Ausführungsformen zufolge ist der Stecker mit einer Befestigungsplatte verbunden, in der insbesondere eine mit der Ausnehmung in dem Stecker fluchtende Ausnehmung vorgesehen sein kann. Mit der Befestigungsplatte kann der Stecker beispielsweise an einem Laser o. dgl angebracht werden, wobei der Laserstrahl ohne Lichtleit-Faser direkt in den Stecker eingekoppelt wird.

### Kurze Beschreibung der Zeichnung

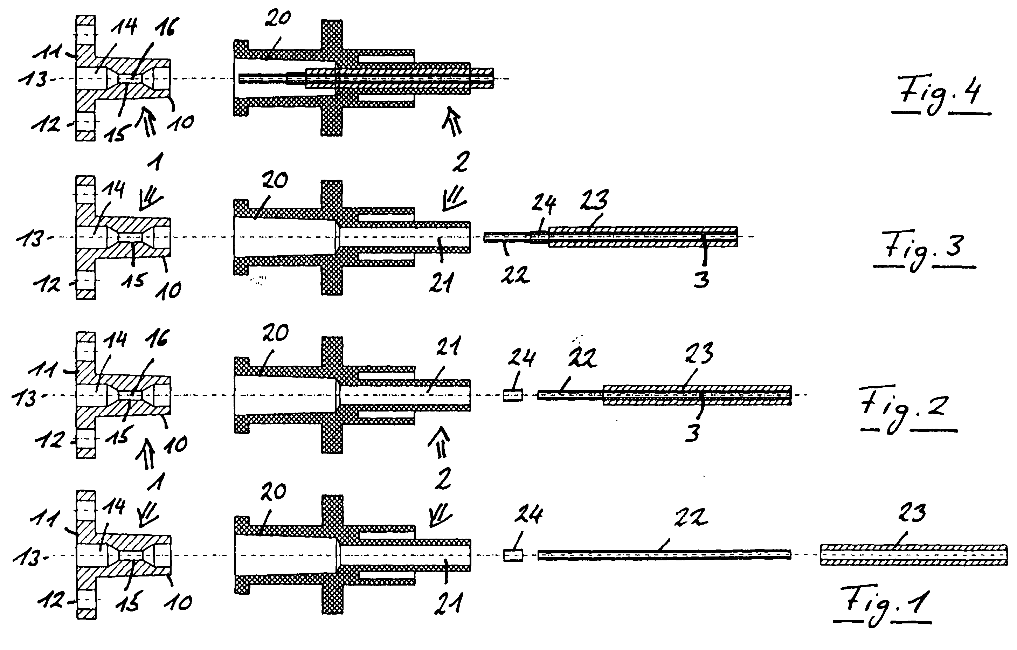

Die Erfindung wird nachstehend anhand eines Ausführungsbeispiels unter Bezugnahme auf die Zeichnung beschrieben, deren
- Figuren 1 bis 5: eine erfindungsgemäße Steckverbindung in verschiedenen Phasen des Zusammenbaus zeigen.

### Darstellung eines Ausführungsbeispiels

Fig. 1 zeigt die Einzelteile einer erfindungsgemäß ausgebildeten Steckverbindung für Lichtleit-Kabel. Die Steckverbindung weist einen Stecker 1 und eine Buchse 2 auf. Bei dem gezeigten Ausführungsbeispiel sind der Stecker 1 und die Buchse 2 ohne Beschränkung des allgemeinen Erfindungsgedankens ein Luer-Push-Stecker und eine Luer-Push-Buchse. Luer-Push-Stecker weisen einen sich vom vorderen Ende nach hinten konusförmig mit einem Konuswinkel von etwa 1,5° erweiternden Grundkörper 10 auf, während Luer-Push-Buchsen eine komplementäre Ausnehmung 20 aufweisen. Mit 3 ist ein Lichtleit-Kabel bezeichnet (Fig. 2 f).

Der Stecker 1 weist eine Grundplatte 11 auf, mit der er beispielsweise an einer nicht dargestellten Lichtquelle, deren Licht in das Lichtleit-Kabel 3 eingekoppelt werden soll, oder an einem optischen Gerät befestigt ist, in das Licht aus dem Lichtleit-Kabel 3 eingekoppelt werden soll. Selbstverständlich kann der Stecker 1 auch ein weiteres Lichtleit-Kabel aufnehmen. Die Lichtquelle kann bevorzugt, jedoch ohne Beschränkung der allgemeinen Anwendbarkeit der Erfindung, ein Laser sein.

Die Grundplatte 11 weist Bohrungen 12 auf, die eine Befestigung an einem Gehäuse des nicht dargestellten Geräts derart erlauben, daß die Mittelachse 13 des Steckers 1 mit dem optischen System des Geräts bzw. einem nachgeordneten Lichtleit-Kabel 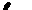 fluchtet".

In den eigentlich als Fluid-Kanal vorgesehenen Kanal 14 des Steckers 1 ist ein - in der Zeichnung einstückig dargestelltes - Teil 15 eingesetzt, das eine dem Durchmesser des Lichtleit-Kabels 3 angepaßte Ausnehmung 16 aufweist, die sich zum vorderen (freien) Ende des Steckers 1 hin trichterförmig erweitert.

In den - eigentlich als Fluid-Kanal vorgesehenen - Kanal 21 der Buchse 2 ist ein Rohr 22 eingesetzt, das das Lichtleit-Kabel 3 aufnimmt (vgl. Fig. 2). 23 bezeichnet ein weiteres Rohr, das den Außendurchmesser des 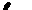 dünnen" Rohres 22 an den Durchmesser des Kanals 21 der Buchse 2 anpaßt und gleichzeitig das dünne Rohr 22 und das in dem Rohr aufgenommene Lichtleit-Kabel 3 stabilisiert.

Mit 24 ist eine Hülse bezeichnet, die die beiden Rohre 22 und 23 gegenseitig fixiert (Fig. 3).

Fig. 4 zeigt, daß das Rohr 22 mit dem Lichtleitkabel 3 derart in der Buchse 2 angeordnet ist, daß sich die Stirnfläche des Lichtleitkabels 3 wenige Millimeter, typischerweise 1,5 mm hinter der vorderen Stirnfläche der Buchse befindet. Dabei steht das Lichtleit-Kabel 3 bevorzugt geringfügig über das Rohr 22 vor.

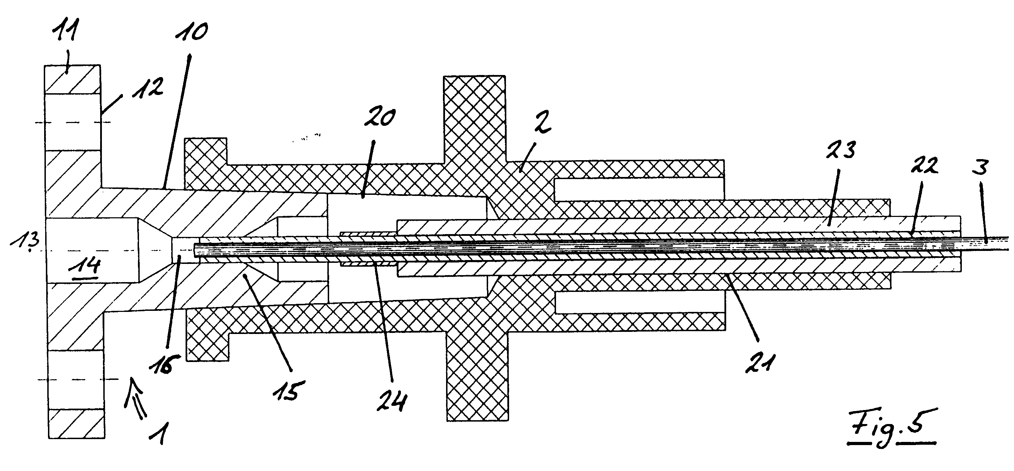

Fig. 5 zeigt den Stecker 1 und die Buchse 2 im Zusammengesetzten Zustand. Die Toleranz des konusförmigen Grundkörpers 10 und der Ausnehmungen 20 sowie der zugeordneten Kanäle der in der Regel mit einem Spritzguß-Verfahren hergestellten Luer-Stecker bzw. -Buchsen sind ausreichend, um das Lichtleit-Kabel 3 bzw. Faser zu zentrieren. Bezüglich weiterer Einzelheiten wird auf die Zeichnung verwiesen.

Vorstehend ist die Erfindung anhand eines Ausführungsbeispiels beschrieben worden. Selbstverständlich sind die verschiedensten Modifikationen möglich:

So ist es möglich, auf das Rohr 22 zu verzichten, so daß die Faser bzw. das Lichtleit-Kabel 3 frei in die Ausnehmung 20 ragt. Weiterhin kann der Stecker 1 mit dem Teil 15 einstückig ausgebildet und insbesondere aus einem 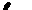 Vollmaterial" herausgearbeitet sein.

## Patentansprüche

1. Steckverbindung zum zentrierten Anschließen einer lichtleitenden Faser bzw. zum zentrierten Koppeln zweier lichtleitenden Fasern, bei der ein Stecker (10) in eine Ausnehmung (20) einer Buchse (2) eingreift, und bei der eine durch die Buchse geführte lichtleitende Faser (3) mit einem Faserende in einer Bohrung (16) des Steckers endet, die in Richtung der Buchse trichterförmig aufgeweitet ist, dadurch **gekennzeichnet**, daß in der Ausnehmung der Buchse ein Rohr (22) vorgesehen ist, das die Faser innerhalb der Bohrung des Steckers praktisch bis zum Faserende umgibt.

2. Steckverbindung nach Anspruch 1,
dadurch **gekennzeichnet**, daß der Stecker und die Ausnehmung der Buchse, in die der Stecker eingreift, in Längsrichtung eine konische Verjüngung aufweisen.

3. Steckverbindung nach Anspruch 1 oder 2,
dadurch **gekennzeichnet**, daß der Konuswinkel der konischen Verjüngung wenige Grad beträgt.

4. Steckverbindung nach einem der Ansprüche 1 bis 3,
dadurch **gekennzeichnet**, daß das Rohr (22) von einem stärkeren Rohr (23) umgeben ist.

5. Steckverbindung nach einem der Ansprüche 1 bis 4,
dadurch **gekennzeichnet**, daß das Rohr (22) nahe hinter einer steckerseitigen Stirnfläche der Buchse endet.

6. Steckverbindung nach Anspruch 5,
dadurch **gekennzeichnet**, daß das vordere Ende des Rohrs ca. 1,5 mm hinter der vorderen Stirnfläche des Grundkörpers der Buchse angeordnet ist.

7. Steckverbindung nach einem der Ansprüche 1 bis 6,
dadurch **gekennzeichnet**, daß das Faserende geringfügig über das vordere Ende des Rohres (22) herausragt.

8. Steckverbindung nach einem der Ansprüche 1 bis 7,
dadurch **gekennzeichnet**, daß der Stecker und die Buchse aus Kunststoff bestehen.

9. Steckverbindung nach Anspruch 8,
dadurch **gekennzeichnet**, daß die Grundkörper des Steckers und/oder der Buchse Spritzgußteile sind.

10. Steckverbindung nach einem der Ansprüche 1 bis 9,
dadurch **gekennzeichnet**, daß Stecker und/oder Buchse durchscheinend und insbesondere durchsichtig sind.

11. Steckverbindung nach einem der Ansprüche 1 bis 10,
dadurch **gekennzeichnet**, daß die Grundkörper des Steckers und/oder der Buchse handelsübliche Luer-Lock- bzw. Luer-Push-Anschlüsse sind.

12. Steckverbindung nach Anspruch 11,
dadurch **gekennzeichnet**, daß in den Fluid-Kanal der Luer-Teile Elemente zum Halten bzw. zum Schützen der lichtleitenden Fasern eingesetzt sind.

13. Steckverbindung nach einem der Ansprüche 1 bis 12,
dadurch **gekennzeichnet**, daß der Stecker mit einer Befestigungsplatte verbunden ist.

14. Steckverbindung nach Anspruch 14,
dadurch **gekennzeichnet**, daß in der Befestigungsplatte eine Ausnehmung vorgesehen ist, die mit der Ausnehmung des Steckers fluchtet.
